# EUROPÄISCHE PATENTANMELDUNG

(11) **EP 4 826 741 A1**
(43) Veröffentlichungstag der Anmeldung: **21.10.2026**
(21) Anmeldenummer: 25170886.3
(22) Anmeldetag: 16.04.2025
(51) Int. Cl.: G21K 1/00, H05H 3/00

(54) **QUELLE ZUR ABGABE VON ATOMEN UND/ODER MOLEKÜLEN SOWIE VERFAHREN ZU DEREN BETRIEB UND HERSTELLUNG**

(71) Anmelder: Gottfried Wilhelm Leibniz Universität Hannover Körperschaft des Öffentlichen Rechts, 30167 Hannover (DE)
(72) Erfinder: KOCH, Jannik, 30163 Hannover (DE); WURZ, Marc Christopher, 30629 Hannover (DE); DENCKER, Folke, 30900 Wedemark (DE); KASSNER, Alexander, 31185 Söhlde (DE); DIEKMANN, Leonard, 30165 Hannover (DE)
(74) Vertreter: Günther, Constantin

(57) **Zusammenfassung**

Die Erfindung betrifft eine Quelle zur Abgabe von Atomen und/oder Molekülen, wobei die Quelle eine Vorratskammer hat, die zur Aufnahme einer Vorratsmasse von zu verdampfenden Atomen und/oder Molekülen eingerichtet ist, z.B. Alkali- und/oder Erdalkalimaterialien, weitere ausgewählte Lanthanoide, Übergangsmetalle oder Moleküle aus solchen Materialien, wobei die Quelle einen Verdampfer hat, wobei die Quelle dazu eingerichtet ist, Atome und/oder Moleküle aus der Vorratskammer mittels des Verdampfers in die Dampfphase zu überführen und die in die Dampfphase überführten Atome und/oder Moleküle in Form eines Strahlenbündels einer mit der Quelle verbundenen Vorrichtung, z.B. einer Quanteneffekt-Vorrichtung, zuzuführen. Die Erfindung betrifft außerdem ein Verfahren zum Betrieb einer solchen Quelle sowie ein Verfahren zu deren Herstellung.

## Beschreibung

Die Erfindung betrifft eine Quelle zur Abgabe von Atomen und/oder Molekülen, wobei die Quelle eine Vorratskammer hat, die zur Aufnahme einer Vorratsmasse von zu verdampfenden Atomen und/oder Molekülen eingerichtet ist, z.B. Alkali- und/oder Erdalkalimaterialien, weitere ausgewählte Lanthanoide, Übergangsmetalle oder Moleküle aus solchen Materialien, wobei die Quelle einen Verdampfer hat, wobei die Quelle dazu eingerichtet ist, Atome und/oder Moleküle aus der Vorratskammer mittels des Verdampfers in die Dampfphase zu überführen und die in die Dampfphase überführten Atome und/oder Moleküle in Form eines Strahlenbündels einer mit der Quelle verbundenen Vorrichtung, z.B. einer Quanteneffekt-Vorrichtung, zuzuführen. Die Erfindung betrifft außerdem ein Verfahren zum Betrieb einer solchen Quelle sowie ein Verfahren zu deren Herstellung.

Eine solche Quelle kann z.B. als Bauteil von Quanteneffekt-Vorrichtungen unterschiedlichster Art genutzt werden, z.B. Quanteneffekt-Vorrichtungen in Form von Quantencomputern, Quantensensoren wie z.B. Atominterferometern, Quantenkommunikationsvorrichtungen und Quantennavigationsvorrichtungen, z.B. in Atomuhren. Eine solche Quelle kann auch für andere Applikationen genutzt werden, z.B. Applikationen, die nicht auf Quanteneffekten basieren, sondern mit klassischer Physik beschrieben werden können, z.B. für optisch gepumpte Magnetometer.

Die Quantentechnologie stellt eine der Schlüsseltechnologien des 21. Jahrhundert da. Durch das Ausnutzen von Quanteneffekten ergeben sich neue Möglichkeiten in den Bereichen des Quantencomputings, der Navigations- und Kommunikationstechnik und der Sensorik. Innerhalb der letzten Jahrzehnte wurden so im Bereich der Sensorik Laborsysteme entwickelt, die sich allesamt durch die höchste Performance im Vergleich zum Stand der Technik auszeichnen. Neben der Weiterentwicklung der Quantensysteme und der Entwicklung neuer Systeme wie dem Quantencomputer ist der aktuelle Schwerpunkt die Verlagerung vom Laborbetrieb hin zur mobilen Anwendung im Feld oder an Bord von Flugzeugen oder anderen Fahrzeugen. Dafür müssen die verschiedenen Kernkomponenten des Quantensystems separat miniaturisiert werden. Ein wesentliches Kernelement der Quantentechnologien sind Atome, die aktiv für Berechnungen oder sensorische Zwecke optisch konditioniert werden. Hier werden spezifische Elemente mit einem entsprechenden Lasersystem gekühlt, gefangen und für die entsprechende Anwendung manipuliert. Zur Bereitstellung dieser Atome mit dem richtigen Massenfluss werden Atomdispenser bzw. Atomquellen eingesetzt, die Atome einer spezifischen Atomsorte in die Dampfphase überführen. Dabei ist besonders die zielgenaue Kontrolle des Massenflusses der Atome, die Reinheit der generierten Dampfphasenatome, sowie die einfache Integration in den Aufbau des Quantensystems von zentraler Bedeutung.

Der Erfindung liegt die Aufgabe zugrunde, eine verbesserte Quelle sowie ein Verfahren zu deren Betrieb und zu deren Herstellung anzugeben.

Diese Aufgabe wird bei einer Quelle der eingangs genannten Art dadurch gelöst, dass die Quelle als mikrotechnologisch hergestellte Quelle ausgebildet ist und wenigstens einen Kollimator mit einem Kollimatorkörper hat, der zur dreidimensionalen Kollimation des Strahlenbündels eingerichtet ist. Dadurch, dass die Quelle mikrotechnologisch hergestellt ist, d.h. überwiegend oder ausschließlich mittels mikrotechnologischer Herstellungsprozesse, kann die Quelle sehr gut miniaturisiert werden, was eine wesentliche Grundlage für eine Kommerzialisierung solcher Quanteneffekt-Vorrichtungen, wie eingangs erwähnt, ist. Mit dieser Erfindung wird eine neue Generation von miniaturisierten und hochintegrierten Quellen für den Einsatz in Quantentechnologien bereitgestellt.

Ein großer Vorteil ist dabei die mikrotechnologische Fertigung der Quelle, die eine zukünftige Massenfertigung mit großen Stückzahlen, hoher Reproduzierbarkeit, sowie perspektivisch günstigen Fertigungskosten möglich macht. Dies ist vor allem für die Kommerzialisierung von Quantensysteme auf Basis ultrakalter Atome von zentraler Bedeutung.

Der Kollimatorkörper kann, im Unterschied zu bekannten Lösungen, bei denen die Fotolithographie zur Herstellung eingesetzt wird, als echter dreidimensionaler Körper hergestellt werden, durch den die Strahlen des Strahlenbündels der Atome und/oder Moleküle in Strahlrichtung über eine bestimmte Wegstrecke geführt werden und auf diese Weise in zwei Raumdimensionen geführt und kollimiert werden. Dabei kann durch entsprechende Formgebung des Kollimatorkörpers die Form des Querschnitts des Strahlenbündels, z.B. kreisförmig, dreieckig, etc, und die Abmaße näherungsweise frei durch die Form des Kollimatorkörpers festgelegt werden. Als Kollimation des Strahlenbündels wird dabei eine Parallelisierung der aus dem Kollimator austretenden Strahlen verstanden, d.h. die austretenden Strahlen sind exakt oder zumindest im Wesentlichen parallel zueinander, so dass eventuelle Abweichungen von der Parallelität vernachlässigbar sind. Damit ist erstmals bei einer mikrotechnologisch hergestellten Quelle eine besonders effiziente Parallelisierung der Strahlen des Strahlenbündels möglich. Dies ist eine günstige Voraussetzung für die Nutzung der Strahlen in Funktionselementen einer Quanteneffekt-Vorrichtung, z.B. für die Interferometrie.

Vorteilhafter Weise ist die erfindungsgemäße Quelle relativ breitbandig ausgelegt, d.h. sie eignet sich für verschiedenste Alkali- und/oder Erdalkalimaterialien und weitere Materialien. Hier kommen neben Alkali- und Erdalkalien auch weitere Atome, aber auch Moleküle infrage. Dazu gehören unter anderen die Lanthanoide (Ytterbium, Dysprosium), Übergangmetalle (Chrom, Quecksilber), Elemente der 3. Hauptgruppe (Al, In,... ), oder Moleküle wie zum Beispiel Rubidiumazid, Cäsiumazid oder Calciumflourid. Diese Materialien können sehr unterschiedliche Verdampfungstemperaturen haben. In einer vorteilhaften Ausgestaltung ist die Quelle dazu eingerichtet, mittels des Verdampfers Atome mit Verdampfungstemperaturen im Bereich von Raumtemperatur (22°C ) bis 1000°C zu verdampfen. Die Quelle kann auch dazu eingerichtet sein, mittels des Verdampfers Atome mit Verdampfungstemperaturen im Bereich von 100°C bis 1000°C zu verdampfen. Die Quelle kann eine Heizvorrichtung haben, z.B. eine elektrisch betriebene Heizvorrichtung, die als Teil des Verdampfers ausgebildet ist und zum Verdampfen der Atome dient. Die Heizvorrichtung kann als elektrisch betriebene Heizvorrichtung ausgebildet sein, z.B. als Heizdraht oder Heizspirale. Der Verdampfer kann elektrische Anschlüsse haben, über die eine elektrische Energiequelle mit der Heizvorrichtung verbunden werden kann. Durch den mikrotechnologischen Aufbau der Quelle können vorteilhafte kurze Aufheizzeiten erreicht werden.

Gemäß einer vorteilhaften Ausgestaltung der Erfindung ist vorgesehen, dass der Kollimator einen plattenförmigen Kollimatorkörper hat, in dem eine Vielzahl von nebeneinander angeordneten, in Strahlrichtung des Strahlenbündels durch den Kollimatorkörper hindurchgehenden Dampfleitkanälen ausgebildet ist, die als Mikrokanäle ausgebildet sind. Die Mikrokanäle können z.B. jeweilige Durchmesser von kleiner als 100 µm haben, es sind je nach Anwendung aber größere Durchmesser möglich. Die Mikrokanäle können z.B. matrixartig nebeneinander angeordnet sein. Die Mikrokanäle können parallel zueinander angeordnet sein. Hierdurch ist bei einfacher Bauweise eine besonders wirksame Kollimation, d.h. eine Parallelisierung und somit Bündelung des Strahlenbündels, mit einem mikrotechnologisch hergestellten Kollimatorkörper möglich.

In einer vorteilhaften Ausgestaltung ist das Verhältnis zwischen dem Durchmesser und der Länge der Mikrokanäle (Aspektverhältnis) kleiner 1/5, kleiner 1/10 oder kleiner 1/20. In einer praktischen Realisierung kann z.B. ein Aspektverhältnis von 1/50 angestrebt werden. Der Durchmesser der Mikrokanäle kann z.B. im Bereich von 10-30 µm liegen. Die Länge der Mikrokanäle kann z.B. bei 1 mm liegen, z.B. im Bereich von 0,5 bis 1,5 mm. Der Abstand zwischen den einzelnen Mikrokanälen im Kollimatorkörper wird als Pitchbreite bezeichnet. Je kleiner diese Pitchbreite ist, desto mehr Atome und/oder Moleküle gelangen durch den Kollimator. Dadurch lässt sich zusätzlich die Atomdichte des Atomstrahls einstellen bzw. für die explizite Anwendung anpassen. Die Pitchbreite kann in einem Beispiel bei 40 µm liegen. In einer praktischen Realisierung kann z.B. ein Aspektverhältnis von 1/50 mit einem Durchmesser von 20µm und einer Länge von 1 mm realisiert werden.

Gemäß einer vorteilhaften Ausgestaltung der Erfindung ist vorgesehen, dass an oder in dem Kollimatorkörper wenigstens ein Heizelement integriert ist, durch das der Kollimatorkörper auf eine Temperatur oberhalb der Verdampfungstemperatur der zu verdampfenden Atome und/oder Moleküle erwärmbar ist, bzw. zumindest auf eine Temperatur erwärmbar ist, die die wenigstens der Verdampfungstemperatur der zu verdampfenden Atome und/oder Moleküle entspricht. Dies hat den Vorteil, dass der Dampfphasenzustand der Atome und/oder Moleküle auch beim Hindurchtreten durch die Mikrokanäle beibehalten werden kann, weil durch das Heizelement eine entsprechende Temperatur im Bereich der Mikrokanäle erzeugt werden kann. Hierdurch wird sehr effizient ein Verstopfen der Mikrokanäle durch abgekühlte Atome und/oder Moleküle vermieden. Dementsprechend ist die Quelle für eine lange Betriebsdauer geeignet. Zudem kann das Heizelement genutzt werden, um vor dem eigentlichen Betrieb der Quanteneffekt-Vorrichtung Feuchtigkeit aus den Mikrokanälen oder anderen Bereichen des Kollimatorkörpers zu entfernen, indem die Feuchtigkeit durch das Heizelement verdampft wird.

Der Kollimatorkörper kann auch ohne Heizelement ausgebildet sein, bzw. in bestimmten Betriebsmodi kann das Heizelement nicht aktiviert werden. Der Kollimator kann generell auch kalt betrieben werden. Dies kann zwar die Lebensdauer reduzieren. Es könnte aber vorteilhaft sein, wenn bei der Anwendung hohe Ansprüche bezüglich der Geschwindigkeits- und Winkelverteilung bestehen. In diesen Fall könnte man einen möglichen verstopften Kollimator außerhalb des Betriebs in einen separaten Schritt durch Heizen wieder reinigen. Ein weiterer Betriebsmodi ist somit der Betrieb bei Raumtemperatur, und falls die Effizienz des Kollomators reduziert ist durch Verstopfungen, folgt ein Heizen und somit ein Verdampfen des Materials in den verstopften Kanälen, sodass diese wieder freiwerden.

Das Heizelement kann als elektrisch betriebenes Heizelement ausgebildet sein, z.B. als Heizdraht oder Heizspirale. Der Kollimator kann elektrische Anschlüsse haben, über die eine elektrische Energiequelle mit dem Heizelement verbunden werden kann.

Gemäß einer vorteilhaften Ausgestaltung der Erfindung ist vorgesehen, dass die Quelle aus mehreren Baugruppen, insbesondere wenigstens drei Baugruppen, modular zusammengesetzt ist, wobei die wenigstens drei Baugruppen eine Aufnahmebaugruppe, eine Verdampferbaugruppe, die die Vorratskammer und den Verdampfer aufweist, und/oder eine Kollimatorbaugruppe mit dem dreidimensionalen Kollimator beinhalten,. Dies erlaubt eine einfache und schnelle Montage der Einzelteile der Quelle, die auch automatisiert erfolgen kann. Die einzelnen Baugruppen können durch die formschlüssige Gestaltung nur in einer definierten, durch die Konstruktion vorgegebenen Weise zusammengesetzt werden, sodass Fehlmontagen vermieden werden. Die einzelnen Baugruppen können jeweils mikrotechnologisch hergestellt sein. In einer vorteilhaften Ausgestaltung können die Verdampferbaugruppe und/oder die Kollimatorbaugruppe formschlüssig in eine Aufnahmekammer der Aufnahmebaugruppe einsetzbar sein.

Gemäß einer vorteilhaften Ausgestaltung der Erfindung ist vorgesehen, dass die Baugruppen miteinander hermetisch gefügt sind, insbesondere durch Schweißen und/oder Kleben. Dies erlaubt eine sichere Verbindung der einzelnen Baugruppen miteinander mittels Fertigungsschritten, die mit dem mikrotechnologischen Aufbau der Quelle kompatibel sind. Insbesondere können mikrotechnologische Verschweißungen genutzt werden, z.B. durch Ultrakurz-Laserpulsen, CW-Laserschweissen oder TLP-Bonden. Alternativ können die Baugruppen auch auf andere Weise miteinander verbunden werden, z.B. durch Kleben oder andere Bondverfahren.

Hierdurch können die Baugruppen zudem in einer ausreichend dichten Weise miteinander verbunden werden, sodass der innere Aufbau der Quelle gegenüber der Umgebung zuverlässig abgekapselt ist und für einen Vakuum-Betrieb der Quanteneffekt-Vorrichtung geeignet ist.

Gemäß einer vorteilhaften Ausgestaltung der Erfindung ist vorgesehen, dass die Quelle eine weitere Baugruppe in Form einer Membranbaugruppe hat, die zur Abdeckung der in der Aufnahmekammer der Aufnahmebaugruppe eingesetzten Verdampferbaugruppe und Kollimatorbaugruppe eingerichtet ist, insbesondere zum hermetischen Abdichten mittels einer Membran der Membranbaugruppe. Die Membranbaugruppe kann ebenfalls mikrotechnologisch hergestellt sein. Vorteilhafter Weise kann die Membranbaugruppe dicht mit der Aufnahmebaugruppe verbunden sein. Die Membranbaugruppe hat in einer vorteilhaften Ausgestaltung eine Membran, durch die die in der Aufnahmebaugruppe angeordnete Verdampferbaugruppe und die Kollimatorbaugruppe gegenüber der Umgebung hermetisch abgedichtet ist. Die Membran kann als dünne Folie oder dünnes Substrat ausgebildet sein.

Gemäß einer vorteilhaften Ausgestaltung der Erfindung ist vorgesehen, dass die Membranbaugruppe mit einem nicht verdampfbaren Getter (NEG) funktionalisiert ist. Die Vorteile, die sich dadurch ergeben, sind eine reduzierte Diffusion durch die Membran und die Möglichkeit Gasmoleküle zu gettern.

Gemäß einer vorteilhaften Ausgestaltung der Erfindung ist vorgesehen, dass die Membranbaugruppe eine integrierte Öffnungsvorrichtung hat, durch die die Membran irreversibel geöffnet werden kann. Auf diese Weise kann z.B. automatisch durch ein angelegtes elektrisches Signal ein definiertes Öffnen der Membran durchgeführt werden. Die integrierte Öffnungsvorrichtung kann z.B. elektrisch steuerbar sein. Beispielsweise kann die Membranbaugruppe eine integrierte Öffnungsvorrichtung in Form wenigstens eines elektrisch ansteuerbaren Heizelements haben, durch das die Membran soweit erhitzt wird, dass sie sich auflöst oder sich zumindest Löcher darin bilden.

Gemäß einer vorteilhaften Ausgestaltung der Erfindung ist vorgesehen, dass der Verdampfer eine integrierte Heizvorrichtung zum Aufheizen der Atome und/oder Moleküle in der Vorratskammer auf deren Verdampfungstemperatur hat. Die integrierte Heizvorrichtung kann eine elektrisch betriebene Heizvorrichtung sein. Beispielsweise kann ein Teil der Verdampferbaugruppe mit elektrischen Leitungen beschichtet sein, durch die eine Widerstandsheizung gebildet wird.

Die eingangs genannte Aufgabe wird ferner gelöst durch ein Verfahren zum Betrieb einer Quelle der zuvor erläuterten Art, bei dem die durch den Verdampfer verdampften Atome und/oder Moleküle durch die Mikrokanäle des Kollimatorkörpers geführt werden und dabei mittels des in dem Kollimatorkörper integrierten Heizelements die Mikrokanäle auf eine Temperatur aufgeheizt werden, die wenigstens der Verdampfungstemperatur der verdampften Atome und/oder Moleküle entspricht. Hierdurch kann sehr effizient die zuvor erläuterte Kollimation des Strahlenbündels durchgeführt werden und zugleich ein Verstopfen der Mikrokanäle durch abgekühlte Atome aus dem Atomvorrat vermieden werden.

In einer Abwandlung des zuvor erläuterten Verfahrens kann der Kollimator bei Raumtemperatur betrieben werden, z.B. ohne Aktivieren des Heizelements, so dass die verdampften Atome und/oder Moleküle bei Raumtemperatur durch die Mikrokanäle des Kollimatorkörpers geführt werden. In diesen Fall kann man einen möglichen verstopften Kollimator außerhalb des Betriebs der Quelle in einen separaten Schritt durch Heizen wieder reinigen.

Gemäß einer vorteilhaften Ausgestaltung der Erfindung ist vorgesehen, dass nach Montage der Quelle an einer Quanteneffekt-Vorrichtung oder sonstigen Vorrichtung die Membran der Membranbaugruppe durch einen irreversiblen Öffnungsprozess geöffnet wird. Die Membran wird beim Öffnungsprozess somit zerstört, sodass die Atome und/oder Moleküle der Quelle an die Quanteneffekt-Vorrichtung oder sonstige Vorrichtung abgegeben werden können. Beispielsweise kann der Öffnungsprozess erst durchgeführt werden, wenn die Quelle druckdicht mit der Quanteneffekt-Vorrichtung oder sonstigen Vorrichtung verbunden ist und im Innenraum der hiermit gebildeten Anordnung ein Vakuum erzeugt worden ist. Dieser Vorgang kann z.B. bei der erstmaligen Inbetriebnahme der Quanteneffekt-Vorrichtung oder sonstigen Vorrichtung durchgeführt werden. Gegenüber dem Stand der Technik kann daher vermieden werden, dass größere Mengen des zu verdampfenden Materials oxidieren und die Performance und die Qualität der Atmosphäre des Ultrahochvakuums (UHV) durch diese Kontaminationen reduziert werden. Mit dieser Erfindung wird eine bessere Qualität der Elemente möglich sein, da der Kontakt mit Sauerstoff während des Einbaus vermieden wird.

Gemäß einer vorteilhaften Ausgestaltung der Erfindung ist vorgesehen, dass vor oder nach dem Öffnen der Membran mittels des in dem Kollimatorkörper integrierten Heizelements der Kollimatorkörper so weit erwärmt wird, dass daran haftendes Wasser und/oder weitere Kontaminationen verdampft werden. Dies hat den Vorteil, dass auf einfache Weise, insbesondere ohne aufwendige Inbetriebnahme-Arbeiten, störende Wassermoleküle und sonstige Kontaminationen auf einfache Weise entfernt werden können. Durch das Entfernen der Wassermoleküle kann die Quanteneffekt-Vorrichtung mit einem hohen Reinheitsgrad der zu verdampfenden Atome und/oder Moleküle betrieben werden.

Die eingangs genannte Aufgabe wird außerdem gelöst durch ein Verfahren zur Herstellung einer Quelle der zuvor erläuterten Art, bei dem in einem Serienproduktionsprozess auf jeweils einem Wafer eine Vielzahl von Aufnahmebaugruppen, Verdampferbaugruppen und/oder Kollimatorbaugruppen hergestellt wird. Dies erlaubt eine sehr effiziente Großserienherstellung von mikrotechnologisch hergestellten Quellen, wobei vorteilhaft bekannte Herstellschritte aus der Halbleitertechnologie eingesetzt werden können.

Gemäß einer vorteilhaften Ausgestaltung der Erfindung ist vorgesehen, dass das Verfahren zumindest teilweise in einer inerten sauerstofffreien Atmosphäre durchgeführt wird. Beispielsweise kann der Schritt des Einfüllens der Vorratsmasse von zu verdampfenden Atomen und/oder Molekülen in die Vorratskammer in einer inerten sauerstofffreien Atmosphäre durchgeführt werden. Der Vorteil ist, dass zum Teil Elemente (z.B. Alkalimetalle oder Erdalkalimetalle) in ihrer reinen Form verwendet werden können, ohne dass diese mit Sauerstoff oder Wasser reagieren. In der Literatur werden hier hauptsächlich Elemente als Verbindungen verwendet (wie zum Beispiel Rubidium- oder Cäsiumazid). Diese sind dann inert gegenüber Sauerstoff, allerdings kommt es dann zu anderen Kontaminationen.

Gemäß einer vorteilhaften Ausgestaltung der Erfindung ist vorgesehen, dass die Quelle als Multikammer-Quelle hergestellt wird, bei der mehrere Verdampfer und jeweilige einem Verdampfer zugeordnete Kollimatoren als gemeinsame Baugruppe mit getrennten Vorratskammern gefertigt werden. In den getrennten Atomvorratskammern können unterschiedliche Alkali- und/oder Erdalkalimaterialien vorhanden sein. Dies hat den Vorteil, dass durch entsprechende Steuerung der Quelle wahlweise unterschiedliche Atomarten der Quanteneffekt-Vorrichtung zugeführt werden können.

Im bisherigen Stand der Technik wurde noch keine Quelle für die Quantentechnologie vorgestellt, die hochintegriert die Kombination aus der zielgenauen thermischen Regulierung, die dreidimensionale Parallelisierung des Atomstrahls, die Reinheit des zu verdampfenden Materials, sowie die einfache Integration in Standardvakuum-, MEMS - und andere Sonderaufbauten ermöglicht. Gleichzeitig ist das gesamte System mikrotechnologisch gefertigt, sodass ein Übergang zur Massenproduktion mit hohen Stückzahlen, einer hohen Reproduzierbarkeit und perspektivisch günstigen Fertigungskosten möglich ist. Hinzu kommt, dass das Quellenpackage flexibel für das Verdampfen von verschiedenen Elementen wie Alkalimetalle, Erdalkalimetalle und viele weiteren Elementen eingesetzt werden kann. Das Quellenpackage kann somit in sehr vielen unterschiedlichen Applikationen der Quantentechnologie verwendet werden. Des Weiteren kann das System durch einen entsprechenden modularen Aufbau zu einem Multispeziesofen erweitert werden.

Dies ist besonders für das Quantencomputing von großer Bedeutung, da für den Betrieb häufig mehrere Atomarten simultan benötigt werden.

Diese Erfindung vereint die folgenden Verbesserungen:
- Miniaturisiertes System mit einem geringen Systemvolumen (im mm³-Bereich)
- Mikrotechnologische Fertigung der Quelle für eine perspektivische Massenproduktion mit hohen Stückzahlen, hoher Reproduzierbarkeit, und geringen Fertigungskosten
- Effiziente Verdampfung der Materialien mit geringer Leistungsaufnahme im Temperaturbereich zwischen Raumtemperatur bis in den Hochtemperaturbereich (ca. 1000°C) und mit gleichzeitig hohen Aufheiz- und Abkühlraten
- Hohe Reinheit der Elemente und keine Verwendung von Verbindungen, die die Qualität des Vakuums reduziert
- Verkapselung in inerter und/oder Vakuumatmosphäre zum Schutz vor Kontaminationen durch Reaktion mit Wasser oder Sauerstoff
- Einfache Handhabung und Lagerung in der Umgebungsluft ohne eine weitere Kontamination
- Kontrollierte Öffnung der Quelle in UHV
- Definierte dreidimensionale Parallelisierung/Kollimation des Strahls für verschiedene Elemente
- Flexible Anwendung von verschiedenen Elementen (Alkalimetalle, Erdalkalimetalle, etc.)
- Modularer und flexibler Aufbau der Quelle für verschiedene Anwendungsfelder
- Möglichkeit zur Erweiterung zu einem Multispeziesofen für bestimmte Anwendungsfelder (z.B. Quantencomputing)
- Einfache Integration in die UHV-Kammer des Quantensystems

Die Erfindung wird nachfolgend anhand eines Ausführungsbeispiels unter Verwendung von Zeichnungen näher erläutert.

Es zeigen
- Figur 1: eine Quelle in Explosionsdarstellung,
- Figur 2: die Quelle gemäß Figur 1 in seitlicher Schnittansicht,
- Figur 3: eine Verdampferbaugruppe in Frontansicht,
- Figur 4: die Verdampferbaugruppe gemäß Figur 3 in rückseitiger Ansicht,
- Figur 5: eine Kollimatorbaugruppe in Frontansicht,
- Figur 6: die Kollimatorbaugruppe gemäß Figur 5 in Seitenansicht,
- Figur 7: die Kollimatorbaugruppe gemäß Figur 5 in rückseitiger Ansicht.

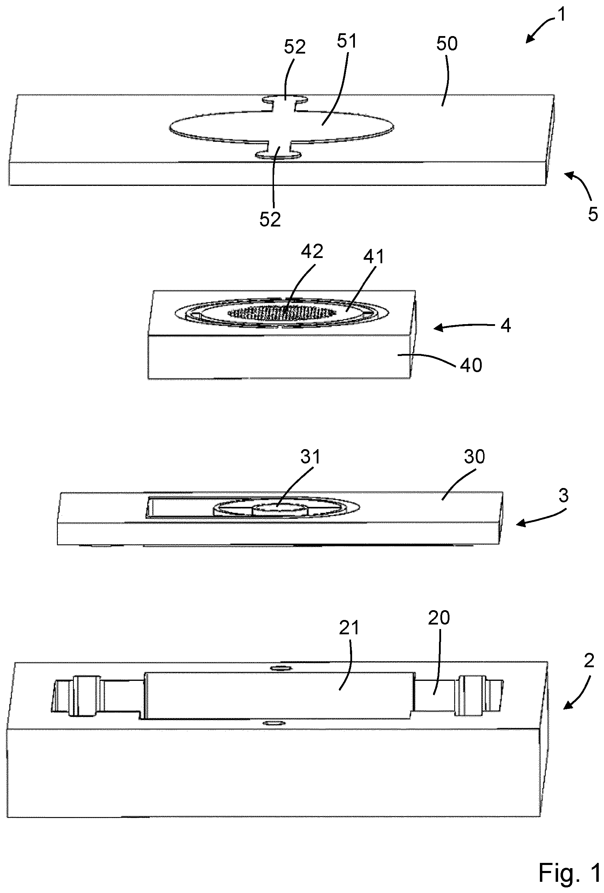

Die in Figur 1 dargestellte Quelle 1 hat einen modularen Aufbau, der mehrere Baugruppen umfasst, z.B. eine Aufnahmebaugruppe 2, eine Verdampferbaugruppe 3, eine Kollimatorbaugruppe 4 und eine Membranbaugruppe 5. Je nach Gestaltung kann die Quelle 1 auch mehr oder weniger Baugruppen haben.

Die Aufnahmebaugruppe 2 dient als eine Art hermetisch abgeschlossenes Gehäusebauteil der Quelle 1. Eine weitere Funktion der Aufnahmegruppe kann die elektrische Kontaktierung der anderen Baugruppen sein. Die Aufnahmebaugruppe 2 hat wenigstens eine Aufnahmekammer 20, 21, in die die Verdampferbaugruppe 3 und die Kollimatorbaugruppe 4 formschlüssig eingesetzt werden können. Wie man erkennt, hat die Verdampferbaugruppe 3 eine größere Breite als die Kollimatorbaugruppe 4. Dementsprechend ist in der Aufnahmebaugruppe 2 eine Aufnahmekammer 20 mit größerer Breite ausgebildet, die zur formschlüssigen Aufnahme der Verdampferbaugruppe 3 geeignet ist. Zur formschlüssigen Aufnahme der Kollimatorbaugruppe 4 ist in der Aufnahmebaugruppe 2 eine nicht ganz so breite Aufnahmekammer 21 ausgeformt, die aber eine größere Tiefe hat als die Aufnahmekammer 20. Hierdurch wird sichergestellt, dass die Verdampferbaugruppe 3 und die Kollimatorbaugruppe 4 nach Einsetzen in die Aufnahmekammern 20, 21 korrekt platziert und relativ zueinander korrekt justiert sind. Zudem wird sichergestellt, dass die Verdampferbaugruppe 3 und die Kollimatorbaugruppe 4 nur in einer definierten Reihenfolge in die Aufnahmebaugruppe 2eingesetzt werden können.

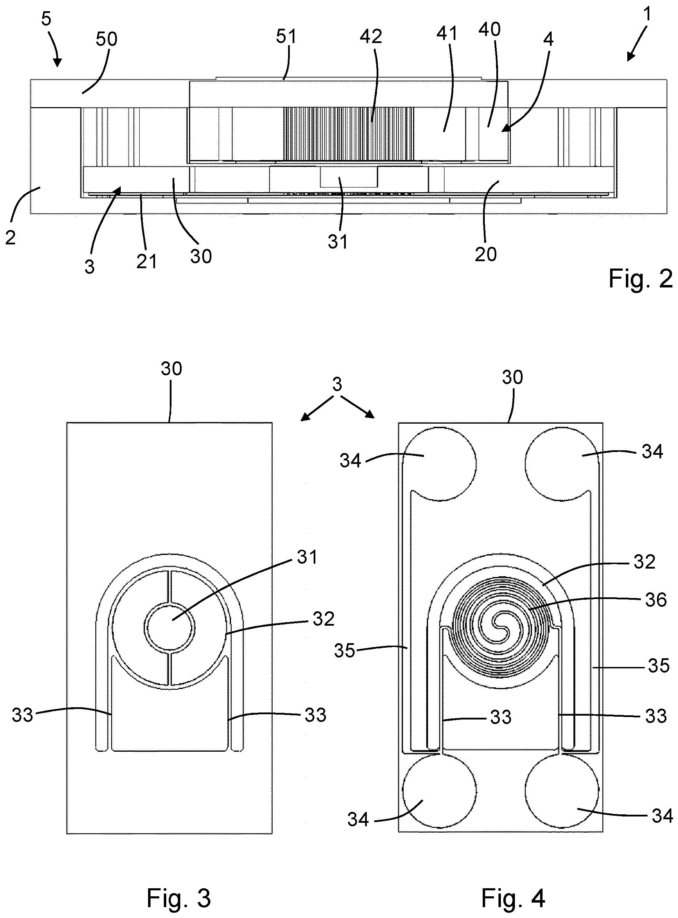

Die Verdampferbaugruppe 3, die nachfolgend anhand der Figuren 3 und 4 noch näher erläutert wird, hat wenigstens eine Vorratskammer 31, in der eine Vorratsmasse von zu verdampfenden Atomen und/oder Molekülen aufgenommen werden kann. Die Verdampferbaugruppe 3 hat einen plattenförmigen Hauptkörper 30, der hinsichtlich seiner Außenkonturen an die Aufnahmekammer 20 angepasst ist.

Die Kollimatorbaugruppe 4 hat einen Hauptkörper 40, an dem ein Kollimatorkörper 41 befestigt ist. Der Kollimatorkörper 41 hat eine Vielzahl von nebeneinander angeordneten Mikrokanälen 42, die in vertikaler Richtung durch den Kollimatorkörper 41 hindurchgehen. Der Hauptkörper 40 ist hinsichtlich seiner äußeren Abmessungen an die Abmessungen der Aufnahmekammer 21 angepasst.

Die Membranbaugruppe 5 hat einen Hauptkörper 50, der hinsichtlich seiner Außenabmessungen den Außenabmessungen der Aufnahmebaugruppe 2 entspricht oder zumindest die Aufnahmekammern 20, 21 ausreichend überdeckt, um die darin aufgenommenen Baugruppen hermetisch gegenüber der Umgebung abzudichten. Hierdurch kann der Hauptkörper 50 eine Art Deckel für die Aufnahmebaugruppe 2 bilden, die die darin liegende Verdampferbaugruppe 3 und die Kollimatorbaugruppe 4 gegenüber der äußeren Umgebung hermetisch abschirmt.

In dem Hauptkörper 50 ist eine Durchgangsöffnung ausgebildet, die von einer dünnen Membran 51 abgedeckt ist. In die Membran 51 sind elektrisch leitfähige Strukturen integriert, z.B. in Form von Leiterbahnen, die mit elektrischen Anschlüssen 52 verbunden sind. Die elektrisch leitfähigen Strukturen bilden eine integrierte Öffnungsvorrichtung der Membranbaugruppe 5. Werden die elektrischen Anschlüsse 52 mit einer elektrischen Energiequelle verbunden, kann hierdurch die Membran 51 erhitzt und thermisch zerstört werden, wodurch ein irreversibler Öffnungsprozess der Quelle durchgeführt werden kann, insbesondere wenn die Quelle an einer Quanteneffekt-Vorrichtung montiert ist und das erforderliche Vakuum hergestellt worden ist.

Die Figur 2 zeigt die Teile der Quelle 1 im zusammengesetzten Zustand. Wie erkennbar ist, befindet sich die Verdampferbaugruppe 3 und die Kollimatorbaugruppe 4 im Inneren der Aufnahmebaugruppe 2. Zur offenen Oberseite hin ist die Aufnahmebaugruppe 2 durch die Membranbaugruppe 5 abgedeckt.

Die Figuren 3 und 4 zeigen die Verdampferbaugruppe 3 in verschiedenen Draufsichten, und zwar in der Figur 3 in einer Draufsicht auf die zur Kollimatorbaugruppe 4 gerichteten Seite und in der Figur 4 von der gegenüberliegenden Seite. Wie erkennbar ist, ist die Vorratskammer 31 an einem Haltekörper 32 angeordnet, der über vergleichsweise dünne Stege 33 mit dem Hauptkörper 30 verbunden ist. Hierdurch wird eine gute thermische Isolation des Haltekörpers 32 und dementsprechend auch der Vorratskammer 31 gegenüber dem Hauptkörper 30 gewährleistet. Die Verdampferbaugruppe 3 hat eine integrierte Heizvorrichtung 36 zum Aufheizen der Atome in der Vorratskammer 31. Die Heizvorrichtung 36 kann z.B. in Form von Leiterschleifen ausgeformt sein, die mit elektrischer Energie beaufschlagt werden können. Die Heizvorrichtung 36 kann über Leiterbahnen 35, die auch über die Stege 33 verlaufen können, mit Anschlüssen 34 verbunden sein. Die elektrische Energie zum Betrieb der Heizvorrichtung 36 kann dann an den Anschlüssen 34 zugeführt werden.

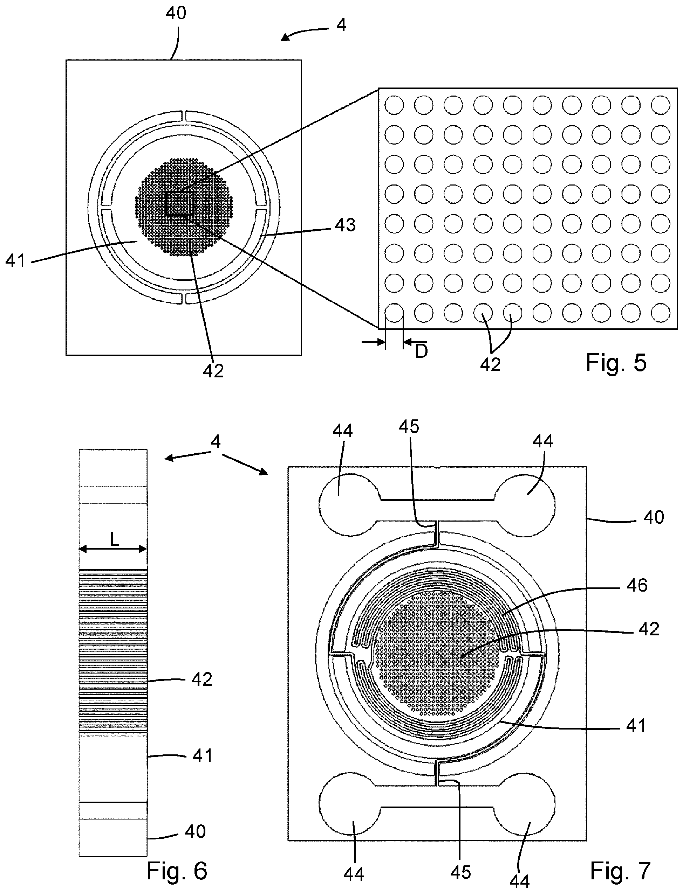

Die Figur 5 zeigt die Kollimatorbaugruppe 4 in einer Draufsicht auf die zur Membranbaugruppe 5 gewandten Seite. Dabei wird rechts eine Ausschnittsvergrößerung eines Ausschnitts der Mikrokanäle 42 dargestellt. Man erkennt, dass der Kollimatorkörper 41 über ein System aus dünnen Stegen 43 mit dem umgebenden Hauptkörper 40 verbunden sein kann. Hierdurch wird, ähnlich wie bei der Verdampferbaugruppe 3, eine gute thermische Entkopplung des Kollimatorkörpers 41 vom Hauptkörper 40 ermöglicht.

Die Figur 6 zeigt die Kollimatorbaugruppe 4 in seitlicher Schnittansicht. Man erkennt, dass die Länge L der Mikrokanäle 42 erheblich größer ist als deren Durchmesser D.

Die Figur 7 zeigt die Kollimatorbaugruppe 4 von der zur Verdampferbaugruppe 3 gewandten Seite. Erkennbar ist, dass die Kollimatorbaugruppe 4 bzw. der Kollimatorkörper 41 ein integriertes Heizelement 46 haben kann, das beispielsweise als Widerstandsheizung ausgebildet sein kann, z.B. mittels auf dem Kollimatorkörper 41 aufgebrachten elektrischen Leitern. Das Heizelement 46 ist über Anschlussleitungen 45 mit Anschlüssen 44 verbunden. Werden die Anschlüsse 44 mit einer elektrischen Energiequelle verbunden, kann hierdurch das Heizelement zum Beheizen des Kollimatorkörpers 41 betrieben werden.

Die erfindungsgemäße Quelle 1 zeichnet sich durch einen Öffnungsmechanismus zur gezielten Freisetzung reiner Alkali- und Erdalkaliatome und weiteren Elementen, mit einer zusätzlichen energieeffizienten und zielgenauen thermischen Regelung zur Steuerung des Massenflusses, sowie der Möglichkeit der geometrischen Parallelisierung des Strahls (Kollimation) aus. Diese Komponenten, die mit mikrotechnologischen Fertigungsmethoden hergestellt werden, sind in einem hermetisch abgeschlossenen und modular aufgebauten Package integriert. Das hermetische Package stellt sicher, dass die Elemente vor Kontaminationen oder Oxidation geschützt sind. Gleichzeitig ermöglicht der modulare Aufbau Flexibilität und Anpassungsfähigkeit, da einzelne Module je nach Bedarf hinzugefügt oder ausgetauscht werden können. Die Quelle 1 kann dabei in einem breiten Anwendungsfeld der Quantentechnologien zum Einsatz kommen. Hierzu gehören besonders die Anwendungen auf Basis von ultrakalten Atomen wie das Quantencomputing, die Quantenkommunikation und -Navigation, und die Quantensensorik.

### a) Einsatz: Quantencomputing

Die internationale Forschungsgemeinschaft treibt verschiedene Quantencomputertechnologien voran, wie die supraleitende Quantenschaltung oder einzelne Spins in Festkörpersystemen. Eine weitere zentrale Technologie basiert auf der Grundlage gefangener kalter Ionen. Diese zeichnet sich durch eine niedrige Fehlerquote, sowie der Möglichkeit des zukünftigen Betriebes bei Raumtemperatur aus. Sie wird daher zum Teil als eine der vielversprechendsten Ansätze für die erste Generation von Quantencomputern angesehen. Um den entscheidenden Vorteil der niedrigen Fehlerrate zu ermöglichen, ist unter anderem die hochgenaue und zielgerichtete Bereitstellung von Atomen einer bestimmten Atomspezies wie Calcium oder Beryllium für das Laden der Ionenfalle erforderlich. Gleichzeitig ist der verfügbare Bauraum durch die Vielzahl an weiteren benötigten Komponenten stark begrenzt, sodass eine entsprechende miniaturisierte und flexible Quelle für verschiedene ausgewählte Elemente ideal zum Anwendungsbereich des Quantencomputings passt. Zum aktuellen Zeitpunkt wurde noch keine für die Anwendung geeignete Quelle in der Literatur vorgestellt. Bisherige Versuche wurden zum großen Teil mittels Laserablation dünner Drähte, die aus dem zu verdampfenden Material bestehen, durchgeführt. Allerdings weist dieser Ansatz bezüglich der Regulierung und Steuerung des Massenflusses, der Montage unter Atmosphärenbedingungen, sowie der Reinheit des Materials einige Probleme auf.

### b)Einsatz: Quantenkommunikation und -Navigation

Eine zentrale Bedeutung in der Kommunikation und Navigation haben unter anderem hochstabile und genaue Zeit- und Frequenznormale. Moderner Mobilfunk mit einer Frequenz von 3,84 GHz Signalfrequenz (UMTS) muss stabil über 24 Stunden sein. Die relative Abweichung der Uhr muss daher besser als 3*10⁻¹² sein. Noch höher sind die Anforderungen in der Satellitennavigation. Hier entspricht eine Zeitdifferenz von 10 ns einem Ortsfehler von etwa 3 m und es werden Abweichungen kleiner 10⁻¹⁴ benötigt [ALM20]. Bei einer zu geringen Genauigkeit müssen die Uhren also in ständigen Intervallen neu gestellt werden. Für die Entwicklung neuer, moderner Standards in der Kommunikation und zur weiteren Verbesserung der Positionsgenauigkeit in der Navigation, welches speziell in kritischen Momenten zum Beispiel in Tunneln oder in Einrichtungen unterhalb der Erdoberfläche wichtig wird, ist die Verbesserung der Uhren von entscheidender Bedeutung. Mit aktuellen Atomuhren können solche benötigten herausragenden Frequenzgenauigkeiten und -stabilitäten kleiner als 10⁻¹⁵ erreicht werden [KIT18]. Jedoch werden diese Systeme hauptsächlich im Labor betrieben. Ein aktueller Schwerpunkt der Forschung ist daher die Verlagerung vom Laborbetrieb hin zur mobilen Anwendung. Dies erfordert eine Miniaturisierung aller Komponenten eines solchen Quantensystems. Eine dieser Komponenten ist die miniaturisierte Quelle, die besonders in mobilen Anwendungen zum Einsatz kommen kann. Gleichzeitig kann eine solche Quelle, die verwendeten makroskopischen Öfen zur Generation von den Atomen in Laboraufbauten ablösen. Durch die zielgerichtete Steuerung des Massenflusses und des Profils des Strahls können auch hier Verbesserungen erwartet werden.

### c) Einsatz: Quantensensorik

Die gleichen Anforderungen an die Quelle für Atomuhren in der Quantenkommunikation und - Navigation gelten auch im Bereich der Quantensensorik. Mithilfe entsprechender Laboraufbauten können hier zum Beispiel mit einem Atom interferometer fundamentale Konstanten oder das Gravitationsfeld der Erde zur Navigation oder Exploration neuer Rohstoffvorkommen noch genauer gemessen werden. Für die Nutzung dieser Systeme, ist auch hier die Miniaturisierung des Systems und damit die Entwicklung einer zuverlässigen, flexiblen und miniaturisierten Quelle maßgeblich.

Die erfindungsgemäße Quelle 1 zeichnet sich ferner durch folgende Merkmale aus:
- Miniaturisiertes System mit einem geringen Systemvolumen (im mm³-Bereich)
- Mikrotechnologische Fertigung der Quelle für eine perspektivische Massenproduktion mit hohen Stückzahlen, hoher Reproduzierbarkeit, und geringen Fertigungskosten
- Effiziente Verdampfung der Materialien mit geringer Leistungsaufnahme im Temperaturbereich zwischen Raumtemperatur bis in den Hochtemperaturbereich (ca. 1000°C) und mit gleichzeitig hohen Aufheiz- und Abkühlraten
- Hohe Reinheit der Elemente und keine Verwendung von Verbindungen, die die Qualität des Vakuums reduziert
- Verkapselung in inerter und/oder Vakuumatmosphäre zum Schutz vor Kontaminationen durch Reaktion mit Wasser oder Sauerstoff
- Einfache Handhabung und Lagerung in der Umgebungsluft ohne eine weitere Kontamination
- Kontrollierte Öffnung der Quelle in UHV
- Definierte dreidimensionale Parallelisierung/Kollimation des Strahls für verschiedene Elemente
- Flexible Anwendung von verschiedenen Elementen (Alkalimetalle, Erdalkalimetalle, etc.)
- Modularer und flexibler Aufbau der Quelle für verschiedene Anwendungsfelder
- Möglichkeit zur Erweiterung zu einem Multispeziesofen für bestimmte Anwendungsfelder (z.B. Quantencomputing)
- Einfache Integration in die UHV-Kammer des Quantensystems

Bei der Erfindung handelt es sich um eine mikrotechnologisch gefertigte Quelle als hermetisches modulares Package, mit einem Öffnungsmechanismus zur gezielten Freisetzung reiner Alkali- und Erdalkaliatomen wie zum Beispiel Rubidium, Cäsium, Kalium, Calcium oder Strontium und weiteren Elementen wie Ytterbium, mit einer zusätzlichen energieeffizienten und zielgenauen thermischen Regelung zur Steuerung des Massenflusses, sowie mit der Möglichkeit der geometrischen Parallelisierung des Strahls (Kollimation). Ziel ist die flexible Freisetzung eines definierten Strahls für viele verschiedene Elemente, die in der Quantentechnologie im Bereich des Quantencomputings, der Quantenkommunikation und - Navigation oder in der Quantensensorik Anwendung finden. Das miniaturisierte Quellenpackage besteht grundlegend aus drei Hauptkomponenten. Hierzu gehört ein Reservoirchip (Verdampferbaugruppe 3) mit einer integrierten Heizung (HCR) für das Verdampfen des Materials, ein Kollimationschip (Kollimatorbaugruppe 4) zur Strahlparallelisierung (BCC), sowie ein Membranchip (MC, Membranbaugruppe 5) zur Verkapselung der Quelle und der kontrollierten Öffnung im Ultrahochvakuum.

Hier werden die unterschiedlichen Komponenten nach der Präparation und Befüllung mit der Vorratsmasse von zu verdampfenden Atomen in einer definierten Atmosphäre hermetisch miteinander verkapselt. Der gesamte Prozess von Präparation, Befüllung und Verkapselung findet dabei z.B. unter Ausschluss von Sauerstoff und Wasser unter anderen in einer Glovebox statt. Die Verkapselung erfolgt bei der Verwendung von transparenten Subtraten z.B. mit dem ultra-kurzgepulsten Laserschweißen. Bei diesen Verfahren wird eine direkte Verbindungsbildung mit einem Laser ermöglicht, bei dem die Temperatur nur lokal im zweistelligen Mikrometerbereich ins System eingebracht wird. Temperatursensitive Komponenten und Materialien, wie zum Beispiel Rubidium, werden somit nicht vom Verbindungsprozess beeinflusst. Bei der Verwendung von nicht transparenten Materialien wird hingegen die hermetische Verkapselung z.B. mit dem Thermokompressionsbonden oder dem Transient Liquid Phase Bonding ermöglicht. Die Atmosphäre kann vor dem Verbindungsprozess durch einen entsprechenden Vakuumaufbau frei eingestellt werden, und ein zusätzliches Inertgas wie zum Beispiel Argon kann definiert eingeleitet werden. Damit soll der Partialdruck des Sauerstoffs und des Wassers kleiner als 10⁻⁶ mbar sein, sodass es nicht zu einer signifikanten Reaktion oder Kontamination im Package während der Lagerung, des Transports und des Einbaus des Systems in der Umgebungsluft kommt. Das gesamte Package wird über eine externe Verbindungstechnologie elektrisch und mechanisch angeschlossen. Beispielsweise ermöglicht die direkte Anbindung an einen Standardvakuumflansch (z.B. der Größe CF16) mit entsprechenden elektrischen Durchführungen eine einfache Verbindung zu einer beliebigen Vakuumkammer. Aber auch die Anbindung an MEMS-Systemen oder anderen Sonderformen ist durch die geeignete Wahl der Verbindungstechnologie ohne weiteres möglich. Hinzu kommt, dass das Package modular aufgebaut werden kann, sodass die Erweiterung zu einem Multispeziesofen ermöglicht wird. Hierdurch kann das Package entweder simultan mehrere verschiedene Elemente verdampfen oder aber es können mehrere modulare Packages mit dem gleichen Element betrieben werden, welches die Lebensdauer oder aber die Einstellung des Massenflusses der Atome deutlich verbessert.

Im Folgenden werden nun die verschiedenen Baugruppen noch einmal detaillierter erläutert.

### Verdampferbaugruppe 3: Reservoir mit integriertem Mikroheizer zur Verdampfung der Alkali- oder Erdalkalimetalle (HCR)

Der Reservoirchip mit einem integrierten Heizer, d.h. der Heizvorrichtung 36, ermöglicht die Verdampfung unterschiedlicher Elemente in einem hohen Temperaturbereich. Während Alkalimetalle wie zum Beispiel Rubidium bereits bei Temperaturen unter 100°C einen ausreichenden Massenfluss an Dampfphasenatomen erreichen, benötigen Erdalkalimetalle wie zum Beispiel Strontium eine Betriebstemperatur zwischen 400-600°C. Der Heizer ist zunächst ausgelegt für einen Temperaturbereich zwischen Raumtemperatur und 800°C. Durch die Anpassung der verwendeten Materialien sind allerdings auch Temperaturen über 1000°C für die Verdampfung weiterer Materialien wie Beryllium oder Chrom, die in verschiedenen ultrakalten Experimenten bereits Anwendung finden, möglich.

Der HCR, dessen prinzipieller Aufbau in den Figuren 3 und 4 zu sehen ist, besteht z.B. aus einem Reservoir mit einem Durchmesser zwischen 1-5 mm und einer Höhe bis zu 1 mm. Dieses ist durch dünne Brückenstrukturen thermisch vom restlichen Substrat entkoppelt. Dadurch werden die thermischen Eigenschaften wie die benötigte Leistung oder die Heiz- und Abkühlrate erheblich verbessert. Der gesamte Chip wird mithilfe von mikrotechnologischen Fertigungsschritten hergestellt. Die gleichzeitige Herstellung mehrerer Systeme (Batch-Herstellung) ist daher möglich. Das Material des HCR besteht aus Silizium, aus Gläsern wie Fused Silica oder aus Keramiken wie Aluminiumnitrid. Die Wahl des Materials erfolgt durch die benötigten thermischen Eigenschaften des Heizers. Wird eine sehr kleine Aufheiz- und Abkühlrate unter einer Sekunde benötigt ist Silizium oder eine Keramik mit einer im Vergleich erhöhten Wärmeleitfähigkeit besser geeignet. Ist eine höhere Maximaltemperatur bei gleicher Leistung wichtiger, ist Glas aufgrund der reduzierten Wärmeleitfähigkeit besser geeignet. Auf der Rückseite befindet sich eine entsprechende Mikroheizerstruktur, mit der das Reservoir durch das Anlegen einer Spannung und die daraus resultierende Joulesche Erwärmung lokal geheizt wird. Das Substrat wird dabei durch die thermische Entkopplung nicht signifikant aufgewärmt. Nach der mikrotechnologischen Fertigung erfolgt die Befüllung des Reservoirs mit dem gewünschten Material. Die elektrische Kontaktierung des HCR erfolgt über vier Kontaktpads, die zum Beispiel mit der Flip-Chip-Technologie elektrisch angeschlossen und betrieben werden kann.

### Kollimatorbaugruppe 4: Multikanalarray mit integriertem Heizer (Heizelement 46) zur Parallelisierung des Strahls (BBC)

Der Kollimationschip für die Parallelisierung des Strahls, dessen Aufbau in der Abbildung 9 zu sehen ist, besteht aus einen Multikanalarray, dessen Kanäle über ein hohes Aspektverhältnis (z.B. >1/50) verfügen. Die Anzahl und Position der Kanäle richten sich nach der gewünschten Form des Strahls. Des Weiteren ist die Pitchbreite, welche den Abstand zwischen den einzelnen Kanälen definiert, möglichst klein im zweistelligen Mikrometerbereich. Dies soll den Verlust von Atomen, die nicht durch die Kanäle gelangen, minimieren. Die Herstellung des BBC wird mit mikrotechnologischen Fertigungsprozessen durchgeführt. Die Kanäle werden in einem Glassubstrat (z.B. Fused Silica) mit einem Laserprozess hergestellt. Dafür werden zunächst die Kanäle mit einem ultrakurz gepulsten Laser modifiziert und anschießend in einer KOH-Lösung geätzt. Auch ist die direkte Kanalherstellung mit einem Laserablationsprozess oder einem Trockenätzprozess für andere Materialien wie Silizium oder bestimmte Keramiken möglich.

Um eine Kondensation des zu verdampfenden Materials in den Kanälen zu verhindern, kann das Multikanalarray zusätzlich mit einer Mikroheizerstruktur geheizt werden. Im Allgemeinen wird die Kondensation verhindert, wenn die Betriebstemperatur des BBC, die Temperatur des HRC bzw. des Dampfphasenatoms etwas übersteigt. Um eine möglichst hohe Temperatur mit einem geringen Leistungsverbrauch und einer schnellen Aufheizrate zu erreichen, ist auch hier, die Heizregion von dem Substrat durch entsprechende Brückenstrukturen entkoppelt. Zudem kann eine zusätzliche nichtverdampfbare Getterbeschichtung integriert werden. Diese kann die Atome, die nicht durch die Kanäle gelangen, kontrolliert binden, sodass mögliche kritische Funktionsflächen wie zum Beispiel die Mikroheizerstrukturen nicht ungewollt beschichtet werden.

### Membranbaugruppe 5: Membranchip mit Mikrostrukturen für die kontrollierte Öffnung in einer UHV-Atmosphäre (MC)

Mit dem Membranchip wird das Quellenpackage hermetisch in einer inerten oder Vakuumatmosphäre verkapselt. Dies verhindert die Kontamination des zu verdampfenden Materials während der Lagerung, des Transport und des Einbaus der Quelle. Erst nach dem Einbau ins Quantensystem und dem Erzeugen einer UHV-Umgebung durch Abpumpen und Ausheizen, wird eine kontrollierte Öffnung des Membranchips initiiert. Damit wird die Membran irreversibel zerstört und somit das Reservoir mit dem zu verdampfenden Material freigelegt.

Der grundlegende Aufbau ist in Figur 1 dargestellt. Der Chip besteht aus einer dünnen Membran. Die kontrollierte Öffnung wird durch entsprechende Mikrostrukturen, die das starke Aufheizen der Membran bewirken, ermöglicht. Das Aufheizen wird dabei entweder elektrisch oder durch eine chemische Reaktion initiiert. Mögliche gasförmige Nebenprodukte, die während des Öffnungsprozesses entstehen, werden hier zunächst durch eine Vakuumpumpe abgepumpt. Erst im Anschluss wird die Quelle mit dem Anschalten des Mikroheizers in Betrieb genommen. Der Membranchip kann je nach Anwendung aus Silizium oder einem Glas bestehen.

In einer vorteilhaften Ausgestaltung wird für die Realisierung der Membran 51 vorgeschlagen, eine Thermoplasten-Folie (z.B. aus FEP) für Hochvakuumanwendungen oder ein dünnes Glassubstrat für Ultrahochvakuumanwendungen einzusetzen, dass durch eine entsprechende lokalisierte Temperaturerwärmung mit einem Mikroheizer geöffnet werden kann. Der Vorteil ist, dass nur eine relativ geringe Leistung und Temperatur die für die Öffnung der Membran benötigt wird. Durch die niedrigere Temperatur wird der Dampfdruck reduziert, wodurch ebenfalls eine unkontrollierte Freisetzung verhindert wird. Gleichzeitig kann der Öffnungsdurchmesser durch die Temperatur und die Dauer kontrolliert eingestellt werden.

Hierbei können die vergleichsweise niedrige Glasübergangs- und Schmelztemperatur von Kunststoffen im Vergleich zu Glas ausgenutzt werden, um eine Membran gezielt zu schmelzen und dadurch zu öffnen. Durch die Oberflächenspannung sowie die rasche Erwärmung und Abkühlung des Materials wird kein vollständiger Flüssigzustand erreicht; stattdessen verformt sich die Membran, und es entsteht ein kreisförmiges Loch. So wird verhindert, dass sich Material in kritischen Bereichen ablagert. Für diesen Prozess werden vakuumkompatible Thermoplaste verwendet, die innerhalb der eingesetzten Temperaturbereiche stabil bleiben und nicht zersetzen. Die Membran besteht aus einer Thermoplastfolie, zum Beispiel FEP-Folie, deren Dicke zwischen 25 und 500 µm liegen kann. Auf diese Folie wird eine Mikroheizerstruktur aufgebracht, z.B. durch einen Lift-off-Prozess, um die Membran lokal zu erwärmen. Die Größe der Membran kann je nach Anwendungsbedarf angepasst werden.

Die Membranbaugruppe wird mit dem Quellenpackage verbunden und sorgt somit für eine Verkapselung des Packages, sodass die Atmosphäre im Package erhalten bleibt. Dies kann durch Kleben durchgeführt werden. Ein vorheriges lokales Corona-Ätzen oder chemisches Ätzen von zum Beispiel FEP-Folie kann durchgeführt werden, die molekulare Zusammensetzung der Oberfläche zu verändern, sodass das Verkleben der Folie ermöglicht wird.

### Öffnungsmechanismus:

Zunächst wird nach dem Einbau der Quelle in die Vakuumkammer des Quantensystem ein Hochvakuum erzeugt. Der Mikroheizer erzeugt dann lokal eine Temperatur, die ausreicht, um ein kleines Loch in der Membran zu bilden. Anschließend wird der Druck zwischen der Vakuumkammer und der Kammer der Quelle allmählich ausgeglichen, sodass gleiche Druckverhältnisse herrschen. Durch eine weitere Erhöhung der Temperatur wird das Loch so weit vergrößert, bis es die auf der Folie befindlichen Leiterbahnen erreicht und zerstört. Das Leiterbahnlayout begrenzt somit nicht nur die maximale Öffnung der Membran, sondern dient auch als Indikator dafür, wann die Membranöffnung ihre endgültige Größe erreicht hat. Ein weiterer angepasster Temperatursensor kann den aktuellen Durchmesser der Öffnung überwachen und so zusätzlichen Einblick in den Prozess bieten.

Als Material kommt zum Beispiel FEP infrage. FEP, ein Tetrafluorethylen-Hexafluorpropylen-Copolymer, ist ein vielseitiges Material, das sich aus den Monomeren Hexafluorpropylen und Tetrafluorethylen zusammensetzt. Dieses Copolymer hat eine sehr gute chemische Beständigkeit, da es eine Vielzahl von Chemikalien und Lösungsmitteln problemlos widersteht. Des Weiteren besitzt es einen Schmelzpunkt von etwa 260°C, welcher mit einem Mikroheizer effizient erreicht werden kann. Gleichzeitig ist die thermische Beständigkeit ausreichend hoch, sodass die Membran verschiedene mögliche thermische Prozesse aushält. Dazu gehört zum Beispiel ein Aufheizen der Vakuumkammer, um den Vakuumdruck zu verbessern. Ein zusätzliches Merkmal von FEP ist seine Transparenz, die es ermöglicht, verschiedene Laserverfahren effizient durchzuführen. Zudem bietet FEP exzellente elektrische Isoliereigenschaften und niedrige Ausgasungseigenschaften.

Alternativ kann für die Membran dünnes Glas/Glasfolie (z.B Borosilikatglas) verwendet werden, mit einem strukturiertem Heizer zur Öffnung der Quelle im Ultrahochvakuum. Da die Kompatibilität von verschiedenen Thermoplasten (z.B. von FEP) für Ultrahochvakuumanwendungen (Druckbereich (1*10^-9 mbar) nicht ideal sind, wird für Anwendungen, die eine sehr hohe Qualität bzgl. des Vakuums benötigen, ein ähnlicher Ansatz mit Glas anstatt der Thermoplast-Folie vorgeschlagen. Bestimmte Gläser haben nachweislich eine exzellente Vakuumkompatibilität und sind für diese Anwendungen sehr gut geeignet. Allerdings ist ebenfalls die Glasübergangstemperatur mit Temperaturen >400°C etwas höher. Sodass die Öffnung von Gläsern kurzzeitig eine höhere Temperaturbelastung bewirkt und eine höhere Leistung erfordert.

## Patentansprüche

1. Quelle (1) zur Abgabe von Atomen und/oder Molekülen, wobei die Quelle (1) eine Vorratskammer (31) hat, die zur Aufnahme einer Vorratsmasse von zu verdampfenden Atomen und/oder Molekülen eingerichtet ist, z.B. Alkali- und/oder Erdalkalimaterialien, weitere ausgewählte Lanthanoide, Übergangsmetalle oder Moleküle aus solchen Materialien, wobei die Quelle (1) einen Verdampfer (32) hat, wobei die Quelle (1) dazu eingerichtet ist, Atome und/oder Moleküle aus der Vorratskammer (31) mittels des Verdampfers (32) in die Dampfphase zu überführen und die in die Dampfphase überführten Atome und/oder Moleküle in Form eines Strahlenbündels einer mit der Quelle (1) verbundenen Vorrichtung, z.B. einer Quanteneffekt-Vorrichtung, zuzuführen, **dadurch gekennzeichnet, dass** die Quelle (1) als mikrotechnologisch hergestellte Quelle (1) ausgebildet ist und wenigstens einen Kollimator mit einem Kollimatorkörper (41) hat, der zur Kollimation des Strahlenbündels eingerichtet ist.

2. Quelle nach Anspruch 1, **dadurch gekennzeichnet, dass** der Kollimator einen plattenförmigen Kollimatorkörper (41) hat, in dem eine Vielzahl von nebeneinander angeordneten, in Strahlrichtung des Strahlenbündels durch den Kollimatorkörper (41) hindurchgehenden Dampfleitkanälen ausgebildet ist, die als Mikrokanäle (42) ausgebildet sind.

3. Quelle nach einem der vorhergehenden Ansprüche, **dadurch gekennzeichnet, dass** an oder in dem Kollimatorkörper (41) wenigstens ein Heizelement (46) integriert ist, durch das der Kollimatorkörper (41) auf eine Temperatur erwärmbar ist, die die wenigstens der Verdampfungstemperatur der zu verdampfenden Atome und/oder Moleküle entspricht.

4. Quelle nach einem der vorhergehenden Ansprüche, **dadurch gekennzeichnet, dass** die Quelle (1) aus mehreren Baugruppen, insbesondere wenigstens drei Baugruppen, modular zusammengesetzt ist, wobei die Baugruppen eine Aufnahmebaugruppe (2), eine Verdampferbaugruppe (3), die die Vorratskammer (31) und den Verdampfer (32) aufweist, und/oder eine Kollimatorbaugruppe (4) mit dem Kollimator beinhalten.

5. Quelle nach Anspruch 4, **dadurch gekennzeichnet, dass** die Verdampferbaugruppe (3) und/oder die Kollimatorbaugruppe (4) formschlüssig in eine Aufnahmekammer (20, 21) der Aufnahmebaugruppe (2) einsetzbar ist.

6. Quelle nach Anspruch 4 oder 5, **dadurch gekennzeichnet, dass** die Baugruppen miteinander durch wenigstens eine Verbindungstechnologie, insbesondere durch Schweißen und/oder Kleben, hermetisch gefügt sind.

7. Quelle nach einem der Ansprüche 4 bis 6, **dadurch gekennzeichnet, dass** die Quelle (1) eine weitere Baugruppe in Form einer Membranbaugruppe (5) hat, die zur Abdeckung der in der Aufnahmekammer (20, 21) der Aufnahmebaugruppe (2) eingesetzten Verdampferbaugruppe (3) und Kollimatorbaugruppe (4) eingerichtet ist, insbesondere zum hermetischen Abdichten mittels einer Membran (51) der Membranbaugruppe (5).

8. Quelle nach Anspruch 7, **dadurch gekennzeichnet, dass** die Membranbaugruppe (5) mit einem nicht verdampfbaren Getter (NEG) funktionalisiert ist.

9. Quelle nach Anspruch 7 oder 8, **dadurch gekennzeichnet, dass** die Membranbaugruppe (5) eine integrierte Öffnungsvorrichtung hat, durch die die Membran (51) irreversibel geöffnet werden kann.

10. Quelle nach einem der vorhergehenden Ansprüche, **dadurch gekennzeichnet, dass** der Verdampfer (32) eine integrierte Heizvorrichtung (36) zum Aufheizen der Atome und/oder Moleküle in der Vorratskammer (31) auf deren Verdampfungstemperatur hat.

11. Verfahren zum Betrieb einer Quelle (1) nach einem der vorhergehenden Ansprüche, **dadurch gekennzeichnet, dass** die durch den Verdampfer (32) verdampften Atome und/oder Moleküle durch die Mikrokanäle (42) des Kollimatorkörpers (41) geführt werden.

12. Verfahren nach Anspruch 11, **dadurch gekennzeichnet, dass** dabei mittels des in dem Kollimatorkörper (41) integrierten Heizelements (46) die Mikrokanäle (42) auf eine Temperatur aufgeheizt werden, die wenigstens der Verdampfungstemperatur der verdampften Atome und/oder Moleküle entspricht.

13. Verfahren zum Betrieb einer Quelle (1) nach einem der vorhergehenden Ansprüche, **dadurch gekennzeichnet, dass** nach Montage der Quelle (1) an einer Quanteneffekt-Vorrichtung oder sonstigen Vorrichtung die Membran (51) der Membranbaugruppe (5) durch einen irreversiblen Öffnungsprozess geöffnet wird.

14. Verfahren nach Anspruch 13, **dadurch gekennzeichnet, dass** vor oder nach dem Öffnen der Membran (51) mittels des in dem Kollimatorkörper (41) integrierten Heizelements (46) der Kollimatorkörper (41) so weit erwärmt wird, dass daran haftendes Wasser und/oder weitere Kontaminationen verdampft werden.

15. Verfahren zur Herstellung einer Quelle nach einem der Ansprüche 4 bis 10, **dadurch gekennzeichnet, dass** in einem Serienproduktionsprozess auf jeweils einem Wafer eine Vielzahl von Aufnahmebaugruppen (2), Verdampferbaugruppen (3) und/oder Kollimatorbaugruppen (4) hergestellt wird.

16. Verfahren nach Anspruch 15, **dadurch gekennzeichnet, dass** das Verfahren zumindest teilweise in einer inerten sauerstofffreien Atmosphäre durchgeführt wird.

17. Verfahren nach Anspruch 15 oder 16, **dadurch gekennzeichnet, dass** die Quelle (1) als Multikammer-Quelle hergestellt wird, bei der mehrere Verdampfer (32) und jeweilige einem Verdampfer (32) zugeordnete Kollimatoren als gemeinsame Baugruppe mit getrennten Vorratskammern (31) gefertigt werden.

## Geänderte Patentansprüche

### Geänderte Patentansprüche gemäss Regel 137(2) EPÜ.

1. Quelle (1) zur Abgabe von Atomen und/oder Molekülen, wobei die Quelle (1) eine Vorratskammer (31) hat, die zur Aufnahme einer Vorratsmasse von zu verdampfenden Atomen und/oder Molekülen eingerichtet ist, z.B. Alkali- und/oder Erdalkalimaterialien, weitere ausgewählte Lanthanoide, Übergangsmetalle oder Moleküle aus solchen Materialien, wobei die Quelle (1) einen Verdampfer (32) hat, wobei die Quelle (1) dazu eingerichtet ist, Atome und/oder Moleküle aus der Vorratskammer (31) mittels des Verdampfers (32) in die Dampfphase zu überführen und die in die Dampfphase überführten Atome und/oder Moleküle in Form eines Strahlenbündels einer mit der Quelle (1) verbundenen Vorrichtung, z.B. einer Quanteneffekt-Vorrichtung, zuzuführen, wobei die Quelle (1) als mikrotechnologisch hergestellte Quelle (1) ausgebildet ist und wenigstens einen Kollimator mit einem Kollimatorkörper (41) hat, der zur Kollimation des Strahlenbündels eingerichtet ist, **dadurch gekennzeichnet, dass** der Kollimator einen plattenförmigen Kollimatorkörper (41) hat, in dem eine Vielzahl von nebeneinander angeordneten, in Strahlrichtung des Strahlenbündels durch den Kollimatorkörper (41) hindurchgehenden Dampfleitkanälen ausgebildet ist, die als Mikrokanäle (42) ausgebildet sind und die die in vertikaler Richtung durch den Kollimatorkörper (41) hindurchgehen, so dass die Strahlen des Strahlenbündels der Atome und/oder Moleküle in Strahlrichtung über eine bestimmte Wegstrecke geführt sind und auf diese Weise in zwei Raumdimensionen geführt und kollimiert sind.

2. Quelle nach einem der vorhergehenden Ansprüche, **dadurch gekennzeichnet, dass** an oder in dem Kollimatorkörper (41) wenigstens ein Heizelement (46) integriert ist, durch das der Kollimatorkörper (41) auf eine Temperatur erwärmbar ist, die die wenigstens der Verdampfungstemperatur der zu verdampfenden Atome und/oder Moleküle entspricht.

3. Quelle nach einem der vorhergehenden Ansprüche, **dadurch gekennzeichnet, dass** die Quelle (1) aus mehreren Baugruppen, insbesondere wenigstens drei Baugruppen, modular zusammengesetzt ist, wobei die Baugruppen eine Aufnahmebaugruppe (2), eine Verdampferbaugruppe (3), die die Vorratskammer (31) und den Verdampfer (32) aufweist, und/oder eine Kollimatorbaugruppe (4) mit dem Kollimator beinhalten.

4. Quelle nach Anspruch 3, **dadurch gekennzeichnet, dass** die Verdampferbaugruppe (3) und/oder die Kollimatorbaugruppe (4) formschlüssig in eine Aufnahmekammer (20, 21) der Aufnahmebaugruppe (2) einsetzbar ist.

5. Quelle nach Anspruch 3 oder 4, **dadurch gekennzeichnet, dass** die Baugruppen miteinander durch wenigstens eine Verbindungstechnologie, insbesondere durch Schweißen und/oder Kleben, hermetisch gefügt sind.

6. Quelle nach einem der Ansprüche 3 bis 5, **dadurch gekennzeichnet, dass** die Quelle (1) eine weitere Baugruppe in Form einer Membranbaugruppe (5) hat, die zur Abdeckung der in der Aufnahmekammer (20, 21) der Aufnahmebaugruppe (2) eingesetzten Verdampferbaugruppe (3) und Kollimatorbaugruppe (4) eingerichtet ist, insbesondere zum hermetischen Abdichten mittels einer Membran (51) der Membranbaugruppe (5).

7. Quelle nach Anspruch 6, **dadurch gekennzeichnet, dass** die Membranbaugruppe (5) mit einem nicht verdampfbaren Getter (NEG) funktionalisiert ist.

8. Quelle nach Anspruch 6 oder 7, **dadurch gekennzeichnet, dass** die Membranbaugruppe (5) eine integrierte Öffnungsvorrichtung hat, durch die die Membran (51) irreversibel geöffnet werden kann.

9. Quelle nach einem der vorhergehenden Ansprüche, **dadurch gekennzeichnet, dass** der Verdampfer (32) eine integrierte Heizvorrichtung (36) zum Aufheizen der Atome und/oder Moleküle in der Vorratskammer (31) auf deren Verdampfungstemperatur hat.

10. Verfahren zum Betrieb einer Quelle (1) zur Abgabe von Atomen und/oder Molekülen, wobei die Quelle (1) eine Vorratskammer (31) hat, die zur Aufnahme einer Vorratsmasse von zu verdampfenden Atomen und/oder Molekülen eingerichtet ist, z.B. Alkali- und/oder Erdalkalimaterialien, weitere ausgewählte Lanthanoide, Übergangsmetalle oder Moleküle aus solchen Materialien, wobei die Quelle (1) einen Verdampfer (32) hat, wobei die Quelle (1) dazu eingerichtet ist, Atome und/oder Moleküle aus der Vorratskammer (31) mittels des Verdampfers (32) in die Dampfphase zu überführen und die in die Dampfphase überführten Atome und/oder Moleküle in Form eines Strahlenbündels einer mit der Quelle (1) verbundenen Vorrichtung, z.B. einer Quanteneffekt-Vorrichtung, zuzuführen, wobei die Quelle (1) als mikrotechnologisch hergestellte Quelle (1) ausgebildet ist und wenigstens einen Kollimator mit einem Kollimatorkörper (41) hat, der zur Kollimation des Strahlenbündels eingerichtet ist, , wobei in dem Kollimatorkörper (41) eine Vielzahl von nebeneinander angeordneten, in Strahlrichtung des Strahlenbündels durch den Kollimatorkörper (41) hindurchgehenden Dampfleitkanälen ausgebildet ist, die als Mikrokanäle (42) ausgebildet sind, wobei die durch den Verdampfer (32) verdampften Atome und/oder Moleküle durch die Mikrokanäle (42) des Kollimatorkörpers (41) geführt werden, **dadurch gekennzeichnet, dass** nach Montage der Quelle (1) an einer Quanteneffekt-Vorrichtung oder sonstigen Vorrichtung die Membran (51) der Membranbaugruppe (5) durch einen irreversiblen Öffnungsprozess geöffnet wird.

11. Verfahren nach Anspruch 10, **dadurch gekennzeichnet, dass** dabei mittels eines in dem Kollimatorkörper (41) integrierten Heizelements (46) die Mikrokanäle (42) auf eine Temperatur aufgeheizt werden, die wenigstens der Verdampfungstemperatur der verdampften Atome und/oder Moleküle entspricht.

12. Verfahren nach Anspruch 11, **dadurch gekennzeichnet, dass** vor oder nach dem Öffnen der Membran (51) mittels des in dem Kollimatorkörper (41) integrierten Heizelements (46) der Kollimatorkörper (41) so weit erwärmt wird, dass daran haftendes Wasser und/oder weitere Kontaminationen verdampft werden.

13. Verfahren zur Herstellung einer Quelle nach einem der Ansprüche 3 bis 9, **dadurch gekennzeichnet, dass** in einem Serienproduktionsprozess auf jeweils einem Wafer eine Vielzahl von Aufnahmebaugruppen (2), Verdampferbaugruppen (3) und/oder Kollimatorbaugruppen (4) hergestellt wird.

14. Verfahren nach Anspruch 13, **dadurch gekennzeichnet, dass** das Verfahren zumindest teilweise in einer inerten sauerstofffreien Atmosphäre durchgeführt wird.

15. Verfahren nach Anspruch 13 oder 14, **dadurch gekennzeichnet, dass** die Quelle (1) als Multikammer-Quelle hergestellt wird, bei der mehrere Verdampfer (32) und jeweilige einem Verdampfer (32) zugeordnete Kollimatoren als gemeinsame Baugruppe mit getrennten Vorratskammern (31) gefertigt werden.
